Europäisches Patentamt

European Patent Office

Office européen des brevets

(19)

(11) **EP 1 267 278 A1**

(12) **EUROPEAN PATENT APPLICATION**

(43) Date of publication:
**18.12.2002 Bulletin 2002/51**

(51) Int Cl.$^7$: **G06F 17/30**

(21) Application number: **01305106.5**

(22) Date of filing: **12.06.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Caplin Systems Limited
London EC2A 1BR (GB)**

(72) Inventor: **Alderson, Ian
Teddington, Middlesex TW11 8DZ (GB)**

(74) Representative: **Walaski, Jan Filip et al
Venner, Shipley & Co,
20 Little Britain
London EC1A 7DH (GB)**

(54) **Streaming of real-time data to a browser**

(57)     Browsers which are required to display a large amount of constantly changing real-time information tend to make excessive demands on available computational resources, since the browser needs to update the screen every time a piece of information in its document object model changes and this process is inherently inefficient. By queuing real-time data updates and emptying the queue at periodic intervals, all updates received within those intervals are simultaneously written to the browser's document object model, so reducing the burden of updating the screen. In addition, earlier updates held in the queue can be overwritten by subsequent updates, so that out-of-date information is never provided to the browser.

Figure 5

**Description**

This invention relates to the field of streaming real-time data to a browser.

The World Wide Web is based on hypertext, which can be thought of as text which is not constrained to be sequential. The Web can handle much more than just text, so the more general term hypermedia is used to cover all types of content, including but not limited to pictures, graphics, sound and video. While the primary language for representing hypermedia content on the Web is HTML, other markup languages are constantly developing, including, for example, XML.

HTML defines the structure and layout of a Web document by reference to a number of pre-defined tags with associated attributes. The tags and attributes are interpreted and the web page is accordingly displayed by a client application running on a computer, commonly referred to as a browser.

Although the use of HTML on its own produces essentially static Web pages, it is well known to use scripting languages such as Javascript™ to enhance HTML functionality; the combination is often referred to as Dynamic HTML. The current generation of browsers use a document object model (DOM) to represent web pages internally. This is an application programming interface for valid HTML and well-formed XML documents. It defines the logical structure of a document and the way in which the document can be accessed and manipulated. In particular, it makes all of the content on a page available to scripting code and enables programs and scripts to dynamically access and update the content, structure and style of documents.

For example, share prices displayed on a browser screen in the form of a table are each represented in the browser's document object model as a text object. The browser can be arranged to display real-time updates of each share price by continuously overwriting each text object in the document object model with data items streamed from a real-time data source.

However, in commercial systems for use, for example, in financial trading environments, the browser screen is required to display a substantial amount of real-time data. In this case, it has been found that the provision of a large amount of constantly changing information to a browser can place an intolerably high load on the system processor, causing the display of updates to be delayed and in extreme cases, cause the browser to stop responding, resulting in the need to close and restart the browser or even reboot the entire system. In environments where the continuous provision of real-information is crucial to obtain a commercial advantage, such behaviour is unacceptable.

The present invention aims to address the above problem.

According to the present invention, there is provided a method of sending real-time data to a browser for display by the browser, wherein the browser is operative to update its display on receipt of a data item for display, the method comprising the steps of receiving a plurality of data items from a real-time data source, storing the plurality of data items as a batch and sending the batch of data items to the browser at a predetermined time.

Advantageously, sending the data items to the browser as a batch allows the browser to perform a single updating procedure to update the screen, rather than having to repeatedly update the screen every time a single data item arrives.

The batch of data items may be stored at the server to which the browser connects to obtain the real-time data, before being sent to the browser, or data items can be individually streamed from the server and stored as a batch at the client computer on which the browser runs.

The batch storage method can comprise queuing the data items.

The batch of data items can be sent to the browser from the server or from the client computer at predetermined intervals, for example around 4 times per second.

The interval chosen should allow sufficient updates to be gathered to improve browser operation, without prejudicing the real-time nature of the data.

In a browser which is configured to represent the data items as objects in a document object model, the step of sending the batch of data items to the browser can include writing all of the data items in the batch to the document object model concurrently.

The method can further include replacing a data item in the batch with an updated data item from the real-time source. By replacing a data item which has not yet been sent to the browser with a later update, the earlier data item is never sent to the browser, resulting in a more efficient updating procedure.

According to the invention, there is further provided a server for providing real-time data to a browser comprising means for receiving a plurality of data items from a real-time data source, means for storing the plurality of data items as a batch and means for streaming the batch of data items to the browser at a predetermined time.

According to the invention, there is additionally provided a program for providing real-time data to a browser comprising means for receiving a plurality of data items from a real-time data source, means for storing the plurality of data items as a batch and means for streaming the batch of data items to the browser at a predetermined time.

Embodiments of the invention will now be described by way of example with reference to the accompanying drawings, in which:

Figure 1 is a schematic diagram of an Internet based system for accessing real-time streaming data;

Figure 2 is a schematic diagram of the architecture of a typical computer;
Figure 3 illustrates a document object model corresponding to a first code extract;
Figure 4 is a screen-shot corresponding to the first code extract;
Figure 5 is a flow chart explaining the streaming of real-time financial data to a web browser in accordance with a first aspect of the invention;
Figure 6 is a flow chart illustrating an improvement to the method of Figure 5;
Figure 7 is a flow chart explaining the streaming of real-time financial data to a web browser in accordance with a second aspect of the invention; and
Figure 8 is a flow chart illustrating an improvement to the method of Figure 7.

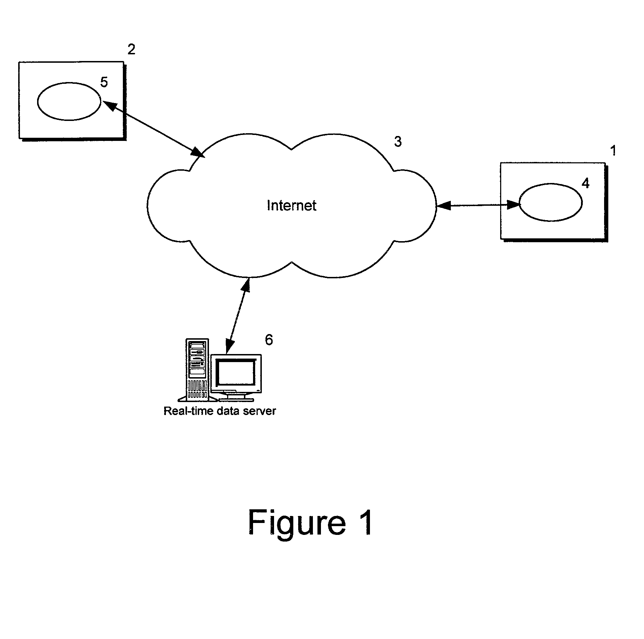

Figure 1 is a schematic diagram of an Internet based system in which a client computer 1 connects to a server computer 2 via the Internet 3. The client computer 1 is capable of running browser software 4, for example, Internet Explorer™ or Netscape Navigator™ for viewing web pages provided by web server software 5 at the server computer 2. A further server computer 6 provides a source of real-time data and its functionality will be described in detail below.

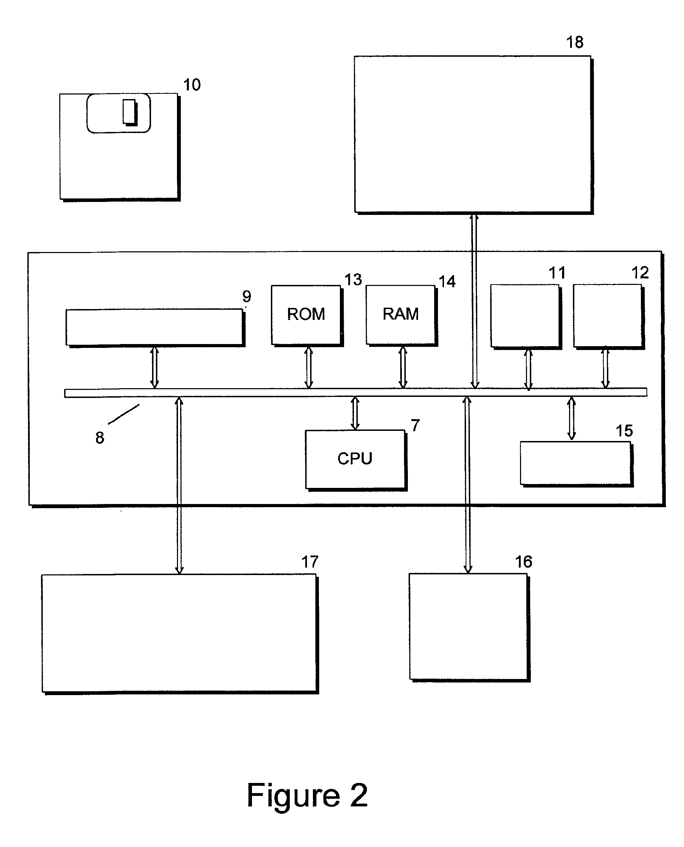

The client computer 1 and server computers 2, 6 are conventional computers, an example architecture for which is shown in Figure 2. Each computer 1, 2, 6 comprises a central processing unit (CPU) 7 for executing computer programs and managing and controlling the operation of the computer. The CPU 7 is connected to a number of devices via a bus 8, the devices including a read/write device 9, for example a floppy disk drive for reading and writing data and computer programs to and from a removable storage medium such as a floppy disk 10, a storage device 11, for example a hard disk drive for storing system and application software, a CD-ROM drive 12 and memory devices including ROM 13 and RAM 14. The computer further includes a network card 15 for interfacing to a network 3 and user input/output devices, such as a mouse 16, keyboard 17 and display 18. It will be understood by the skilled person that the above described architecture is not limiting, but is merely an example of a typical computer architecture. It will be further understood that the described computer has all the necessary operating system and application software to enable it to fulfil its purpose.

As mentioned above, the current generation of web browsers represent the content and format of web pages as a document object model (DOM). The DOM is an application programming interface (API) for documents which defines the logical structure of documents and the way a document is accessed or manipulated. The DOM specification is under constant development by the World Wide Web Consortium (W3C), but it is currently implemented differently depending on the browser software being used, so that access to and manipulation of the elements on a web page is browser type and browser version specific. Document object models are implemented by, for example, Internet Explorer version 4 and above and Netscape Navigator version 6.

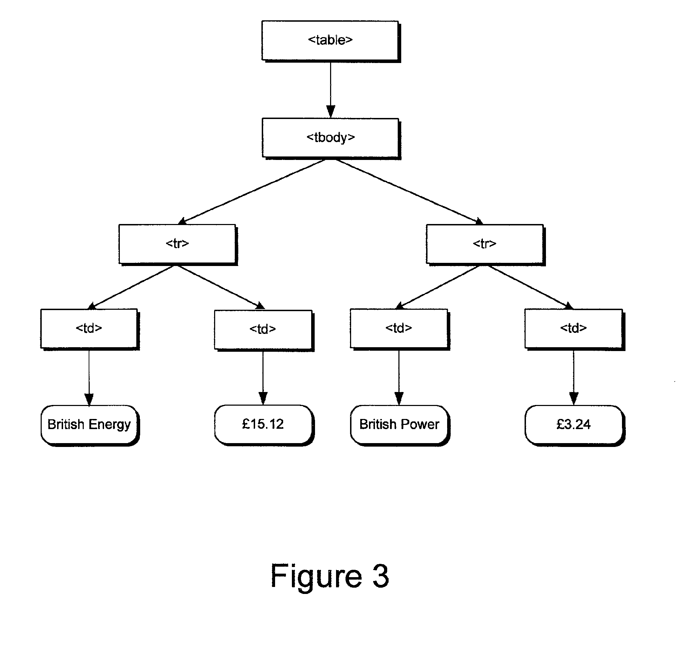

For example, the HTML extract shown as Code Extract 1 below is represented by the document object model shown in Figure 3.

```
<table>
<tbody>
<tr>
<td>British Energy</td>
<td>£15.12</td>
</tr>
<tr>
<td>British Power</td>
<td>£3.24</td>
</tr>
</tbody>
</table>
```

**Code Extract 1**

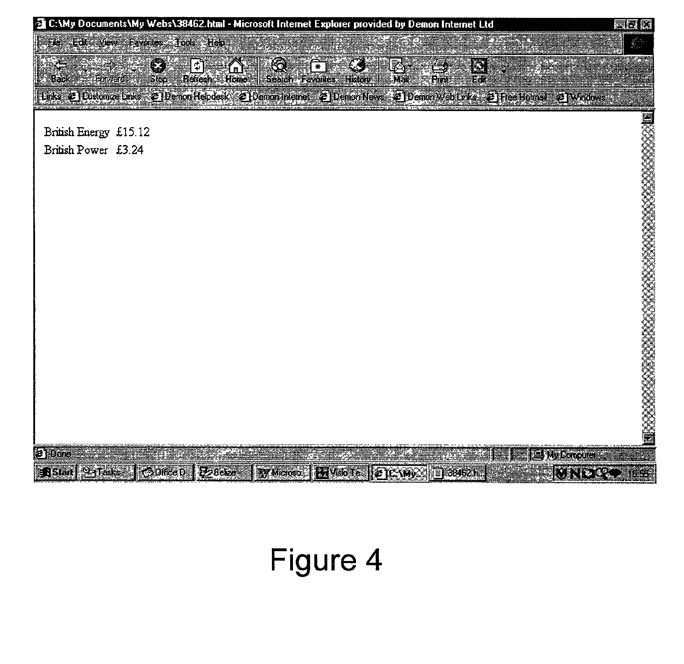

Code Extract 1 also corresponds to the browser display shown at Figure 4. A data item is embedded at a particular position in a web page by placing it into an HTML element at that position. An HTML element is defined by a pair of tags between which text can be placed, such as <td>...</td>, <div> ... </div> or <p>... </p> tags.

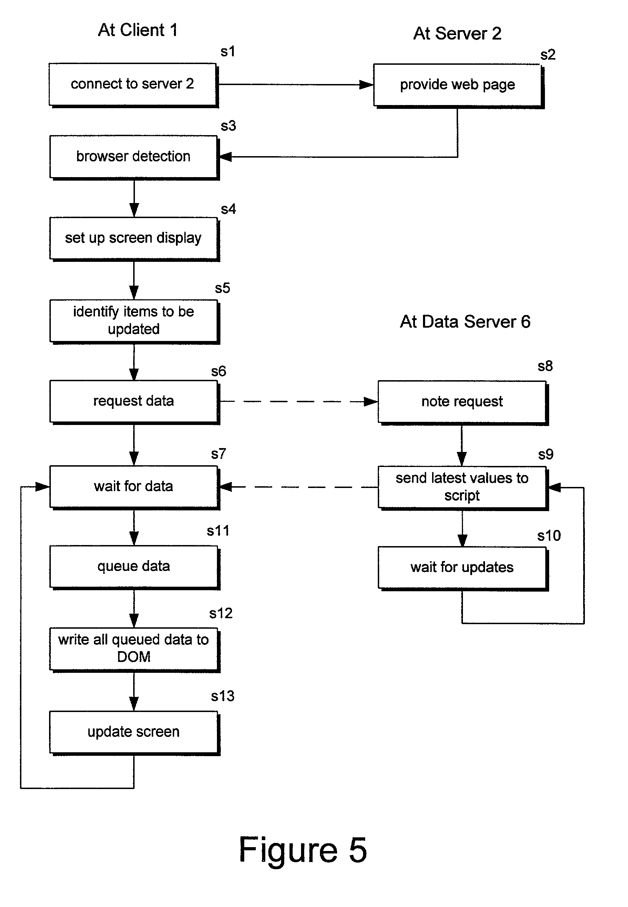

The efficient streaming of real-time data to a browser is described below with reference to Figure 5.

Referring to Figure 5, the client computer 1 connects to the server machine 2 to obtain a financial information service (step s1). The web server 5 at the server 2 provides a web page which includes code for implementing the invention, referred to herein as a script (step s2). For example, the HTML code for the web page includes a SCRIPT tag in the general form:

```
<script language=javascript src=url ></script>
```

The 'src' attribute points to the url of the directory containing the program, written for example in Javascript, which provides the functionality according to the invention.

The script performs browser detection (step s3) in a manner well-known per se to determine whether the browser is at least Internet Explorer version 4, Netscape Navigator version 6 or some other browser which implements a DOM and therefore to determine which DOM should be used.

The script then sets up the screen display by writing supplied or default attribute values to the document object model specifying how the data retrieved from the data source is to be presented (step s4). For example, in relation to share price data, these attributes define what constitutes 'up' and what constitutes 'down' for the purpose of determining temporary background colour change (flashing) when a value updates. An attribute may specify that a value greater than the previous value is interpreted as 'up' and a value less than the previous value interpreted as 'down'. Alternatively, a positive value is interpreted as 'up' and a negative value as 'down'. Other attributes define the colour to be used for the background flash for down, up and no change updates respectively. The colour may be any valid HTML colour. Similarly, other attributes define the corresponding up/down definitions and colour changes for the foreground (text) colour change when a value updates. A 'flashtime' attribute is the length of time in milliseconds for which the background to each element remains highlighted, i.e. flashes, when the value of that element is updated. For example, flashtime=500 causes the colour of each element to change when the value updates and to revert to the original colour half a second later.

The script is then arranged to identify the data items which are required to be updated (step s5), so that the corresponding real-time information can be extracted from the relevant real-time data source. For example, each item is identified by symbol and field identifier (fid) attributes, which reference information from an external data source. For example, Caplin Systems Ltd., London, UK, have developed a web protocol known as Real Time Text Protocol (RTTP), which implements real-time streaming for almost all types of information, including logical records, news and free-format pages. RTTP data sources for providing information which is capable of being referenced by the symbol and fid attributes are available by subscription over the Internet. The identification of a data item can be performed, for example, by extracting identification information for that item included in the web page, in accordance with the procedure set out in our copending application no. 00309703.7, the disclosure of which is incorporated herein by reference.

The 'symbol' attribute specifies the financial instrument which is being referenced. The symbol used to identify a particular instrument depends on the symbology being used by the data source. For example, symbol= "IBM.N" represents the Reuters symbology for the real-time price of IBM ordinary shares traded on the New York Stock Exchange.

The 'fid' attribute specifies a piece of data relating to the financial instrument selected by the 'symbol' attribute. For example, typical values for a particular stock are "Bid", "Ask", "Mid", "Chng" and "Cls", representing the bid price, asking price, mid price, change on the day and previous day's closing price respectively. The range of 'fids' available for a particular financial instrument depends on the symbology being used by the data source. For example, fid= "Ask" displays the most recent price at which the instrument specified by the 'symbol' attribute was offered for sale in the market.

The specified attributes are used to retrieve the data from the real-time data source as described in detail below.

For example, a Java applet is used to implement a connection between the script and the data server 6 shown in Figure 1. A request is sent via the applet to the data server 6 specifying the required data (step s6). The script then waits to receive data from the server (step s7). The data server 6 notes the data request (step s8) and sends the latest available value of the updated data to the script (step s9). The data server 6 then waits for further updates (step s10). Every time the value of the requested data is updated, the updated value is sent to the script by the data server (step s9). Each data item sent comprises a value, together with a symbol and a field identifier to enable identification of the item.

Over a given time interval, for example 0.25 seconds, all the updated values received from the data server 6 are temporarily stored, for example by placing them into a queue as each is received (step s11). The queue is emptied at predetermined intervals, for example, four times a second, by writing all the data items in the queue to the document object model concurrently (step s12). The browser then updates the screen display (step s13), taking account of all the changes made, rather than needing to recalculate the screen display based on each change as it arrives.

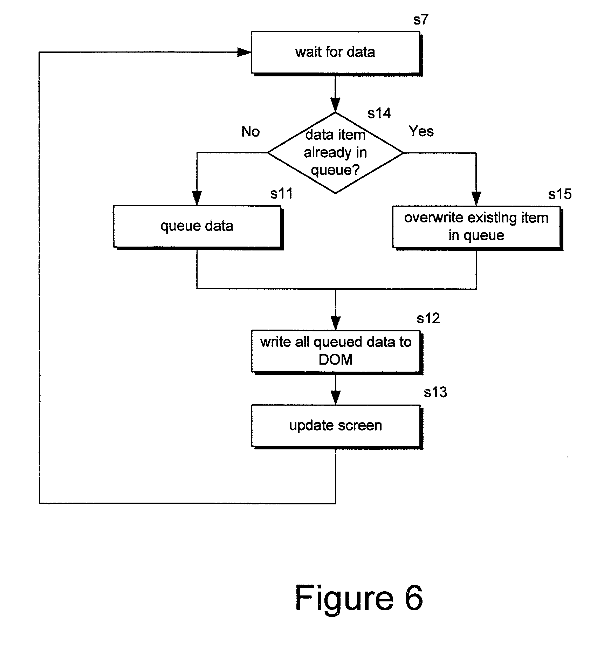

While data is held in a queue, a data update which supersedes an existing data item may arrive. In a further improvement of the above method illustrated in Figure 6, the script tests for this condition (step s14), and if it determines that a later data item supersedes an earlier one, the earlier data item is replaced in the queue by the more recent data item (step s15), so that the earlier data item is never written to the document object model. If there is no existing item in the queue corresponding to the latest update, the update is queued as before (step s11). All queued data is then written to the DOM and the browser screen updated as described in relation to Figure 5 (steps s12 and s13).

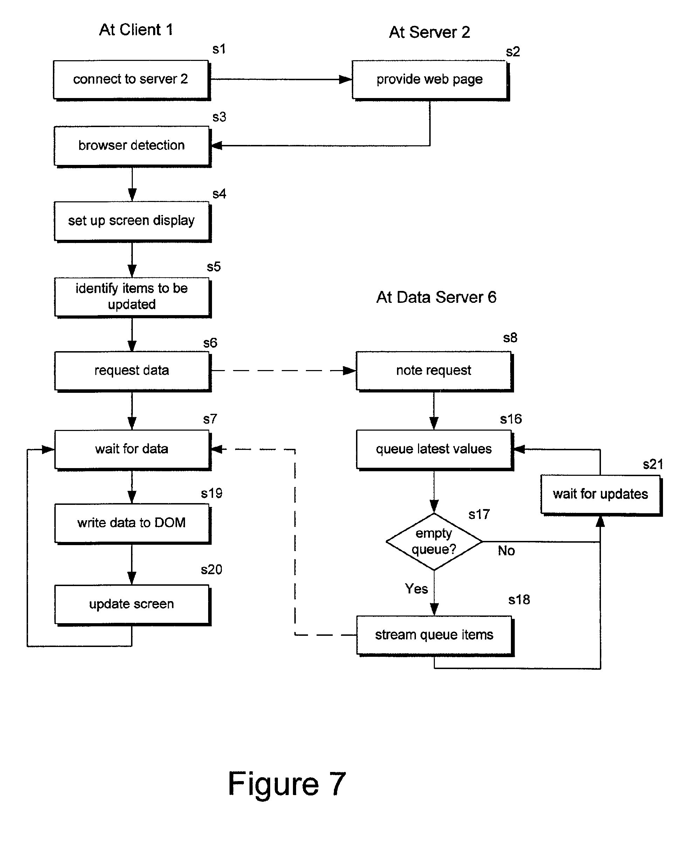

In a second aspect of the invention shown in Figure 7, the queuing is performed at the server rather than the browser. The initial steps s1 to s8 proceed as described in relation to the first aspect above. However, when the data server 6 receives an updated value it queues the value together with all previously updated values within a given interval, for example 0.25 seconds (step s16). The server then determines whether the queue should be emptied (step s17), which is done, for example, 4 times a second. If the queue is to be emptied, all of the items in the queue are streamed to the browser (step s18) where they are written to the document object model concurrently (step s19). The browser then updates the screen display (step s20), taking account of all the changes made, rather than needing to recalculate the screen display based on each change as it arrives.

In the event that the queue is not to be emptied, the server waits for updates (step s21), queues them (step s16) and then repeats the queue checking/emptying process.

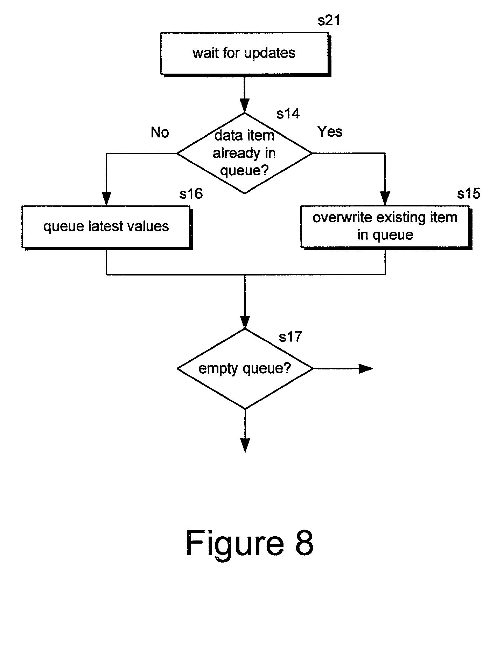

While the item updating embodiment of Figure 6 has been described in relation to the first aspect of the invention illustrated in Figure 5, it can also be used in conjunction with the second aspect of the invention described above with reference to Figure 7, as shown in Figure 8. The overwriting mechanism in this example is operative after each update is received (step s21).

While the above methods have been described in relation to a data server which provides a source of streaming data, it will be understood that the invention is not limited to this, but can be implemented with any data source, including a source from which data can be periodically requested, or by any method by which numerical or other information is updated or computed.

Although the Web server machine 2 and data server 6 have been shown as separate computers, it will be understood that the web server 5 and data server 6 can be server processes running on the same physical machine.

**Claims**

1. A method of sending real-time data to a browser for display by the browser, wherein the browser is operable to update its display on receipt of a data item for display, the method comprising the steps of:

   receiving a plurality of data items from a real-time data source;
   storing the plurality of data items as a batch; and
   sending the batch of data items to the browser at a predetermined time.

2. A method according to claim 1, wherein the browser is operable to connect to a server to request the real-time data, the batch of data items being stored at the server.

3. A method according to claim 1, comprising receiving the plurality of data items at a client computer on which the browser is running, further comprising storing the plurality of data items as a batch at the client computer.

4. A method according to any one of the preceding claims, wherein the step of storing the batch of data items comprises queuing the data items.

5. A method according to any one of the preceding claims, further comprising replacing a data item in the batch with an updated data item from the real-time source.

6. A method according to any one of the preceding claims, comprising sending the batch of data items to the browser at predetermined intervals.

7. A method according to claim 6, wherein the predetermined intervals comprise around 4 times per second.

8. A method according to any one of the preceding claims, wherein the browser is configured to represent the data items as objects in a document object model and wherein the step of sending the batch of data items to the browser includes writing the data items to the document object model concurrently.

9. A server for providing real-time data to a browser comprising:

   means for receiving a plurality of data items from a real-time data source;
   means for storing the plurality of data items as a batch; and
   means for streaming the batch of data items to the browser at a predetermined time.

10. A server according to claim 9, further comprising means for replacing a data item in the batch with an updated data item from the real-time source.

11. A program which, when executed by a processor, is operative to implement the steps of any one of claims 1 to 8.

12. A program for providing real-time data to a browser comprising:

   means for receiving a plurality of data items from a real-time data source;
   means for storing the plurality of data items as a batch; and
   means for streaming the batch of data items to the browser at a predetermined time.

13. A program according to claim 12, further comprising means for replacing a data item in the batch with an updated data item from the real-time source.

14. A program according to any one of claims 11 to 13 on a carrier medium.

# Figure 1

18

10

13 14 11 12

9

ROM RAM

8

7

CPU

15

17 16

# Figure 2

Figure 3

Figure 4

At Client 1

At Server 2

```
s1
[ connect to server 2 ] ─────────────────────────────────▶ [ provide web page ]   s2

s3
[ browser detection ] ◀─────────────────────────

s4
[ set up screen display ]

s5
[ identify items to be updated ]
```

At Data Server 6

```
s6
[ request data ] ─ ─ ─ ─ ─ ─ ─ ─ ─▶ [ note request ]   s8

s7                                   s9
[ wait for data ] ◀─ ─ ─ ─ ─ [ send latest values to script ]

s11                                  s10
[ queue data ]                       [ wait for updates ]

s12
[ write all queued data to DOM ]

s13
[ update screen ]
```

# Figure 5

s7

wait for data

s14

No ← data item already in queue? → Yes

s11

queue data

s15

overwrite existing item in queue

s12

write all queued data to DOM

s13

update screen

# Figure 6

At Client 1

At Server 2

connect to server 2 s1 → provide web page s2

browser detection s3

set up screen display s4

identify items to be updated s5

At Data Server 6

request data s6 ----→ note request s8

wait for data s7

write data to DOM s19

update screen s20

queue latest values s16

wait for updates s21

empty queue? s17

No

Yes

stream queue items s18

# Figure 7

Figure 8

**EP 1 267 278 A1**

European Patent Office

**EUROPEAN SEARCH REPORT**

Application Number

EP 01 30 5106

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 404 488 A (KERRIGAN MICHAEL ET AL) 4 April 1995 (1995-04-04) | 1,2,4-6, 9-14 | G06F17/30 |
| Y | | 8 | |
| | * abstract * | | |
| | * column 1, line 1 - column 2, line 47 * | | |
| | * column 4, line 23 - column 7, line 12 * | | |
| | * column 17, line 1 - line 55 * | | |
| | * claims 1,7,11 * | | |
| Y | MEIJER E ET AL: "Client-side Web scripting with HaskellScript" PRACTICAL ASPECTS OF DECLARATIVE LANGUAGES. FIRST INTERNATIONAL WORKSHOP, PADL'99. PROCEEDINGS, PROCEEDINGS OF FIRST INTERNATIONAL WORKSHOP ON PRACTICAL ASPECTS OF DECLARATIVE LANGUAGES 1999 (CO-LOCATED WITH POPL'99), SAN ANTONIO, TX, USA, 18-19 JAN., 'Online! pages 196-210, XP002192758 1999, Berlin, Germany, Springer-Verlag, Germany ISBN: 3-540-65527-1 Retrieved from the Internet: <URL:http://link.springer.de/link/service/ series/0558/papers/1551/15510196.pdf> 'retrieved on 2002-03-12! * abstract * * page 196, line 1 - page 197, line 16 * * page 200, line 9 - page 206, line 14 * | 8 | |
| A | FR 2 760 110 A (NETGEM) 28 August 1998 (1998-08-28) * the whole document * | 1-14 | |

TECHNICAL FIELDS SEARCHED (Int.Cl.7)

G06F

-/--

The present search report has been drawn up for all claims

| Place of search | Date of completion of the search | Examiner |
|---|---|---|
| THE HAGUE | 12 March 2002 | Wiltink, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**European Patent Office**

## EUROPEAN SEARCH REPORT

Application Number

EP 01 30 5106

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ENGLAND P ET AL: "RAVE: Real-time services for the Web" COMPUTER NETWORKS AND ISDN SYSTEMS, NORTH HOLLAND PUBLISHING. AMSTERDAM, NL, vol. 28, no. 11, 1 May 1996 (1996-05-01), pages 1547-1558, XP004018250 ISSN: 0169-7552 * the whole document * | 1-14 | |
| A | EP 0 889 421 A (YAHOO INC) 7 January 1999 (1999-01-07) * abstract * * page 2, line 30 - line 47 * | 1-14 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 12 March 2002 | Wiltink, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 30 5106

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2002

| Patent document cited in search report | | Publication date | Patent family member(s) | | Publication date |
|---|---|---|---|---|---|
| US 5404488 | A | 04-04-1995 | NONE | | |
| FR 2760110 | A | 28-08-1998 | FR | 2760110 A1 | 28-08-1998 |
| | | | AU | 6406398 A | 09-09-1998 |
| | | | EP | 0931293 A1 | 28-07-1999 |
| | | | WO | 9837498 A1 | 27-08-1998 |
| EP 0889421 | A | 07-01-1999 | US | 5983227 A | 09-11-1999 |
| | | | AU | 738648 B2 | 20-09-2001 |
| | | | AU | 6991598 A | 17-12-1998 |
| | | | EP | 0889421 A1 | 07-01-1999 |
| | | | WO | 9857276 A1 | 17-12-1998 |

EPO FORM P0459

For more details about this annex : see Official Journal of the European Patent Office, No. 12/82